# FASCICULE DE BREVET EUROPEEN

(11) **EP 1 419 079 B1**
(45) Date de publication et mention de la délivrance du brevet: **09.04.2008**
(21) Numéro de dépôt: 02784862.1
(22) Date de dépôt: 11.07.2002
(51) Int. Cl.: B60T 13/569

(54) **DISPOSITIF DE FREINAGE UTILISANT UN SERVOMOTEUR ET UN MA TRE-CYLINDRE A MONTAGE SIMPLIFIE**
EINEN SERVOMOTOR UND EINEN HAUPTZYLINDER MIT VEREINFACHTEM AUFBAU UMFASSENDE BREMSANLAGE
BRAKING SYSTEM COMPRISING A SERVOMOTOR AND A MASTER CYLINDER WITH SIMPLIFIED ASSEMBLY

(30) Priorité: 13.07.2001 FR 0109445
(43) Date de publication de la demande: 19.05.2004
(73) Titulaire: ROBERT BOSCH GMBH, 70442 Stuttgart (DE)
(72) Inventeur: ATTARD, Jean-Marc, F-60500 Chantilly (FR)
(74) Mandataire: Hurwic, Aleksander Wiktor
(86) Numéro de dépôt international: PCT/FR2002/002443
(87) Numéro de publication internationale: WO 2003/006295

(56) Documents cités:
- EP-A- 0 700 815
- DE-A- 4 404 334
- DE-A- 4 420 112

## Description

La présente invention concerne, de façon générale, les systèmes de freinage pour véhicules automobiles.

Plus précisément, l'invention concerne un dispositif de freinage, comprenant un maître-cylindre et un servomoteur pneumatique d'assistance au freinage, le maître-cylindre étant fixé de façon étanche à une enveloppe rigide du servomoteur.

Les dispositifs de ce type sont bien connus de l'homme de l'art et utilisés depuis des décennies. Le document DE-A- 44 04 334 décrit un dispositif de freinage selon le préambule de la revendication 1.

Pour autant, ces dispositifs n'ont pas cessé de faire l'objet de recherches et de développements qui visent à en améliorer les performances et / ou en réduire les coûts de fabrication.

La présente invention, qui s'inscrit dans ce courant, a pour but premier de proposer un dispositif de ce type, permettant un montage rapide, aisé et réversible.

A cette fin, le dispositif selon l'invention, par ailleurs conforme à la définition générique qui en est donnée dans le préambule ci-dessus, est essentiellement caractérisé en ce que l'enveloppe du servomoteur présente une cheminée cylindrique débouchant à l'intérieur du servomoteur par une ouverture circulaire de diamètre déterminé et dans laquelle une première extrémité du maître-cylindre est insérée par translation relative suivant une première direction le long d'un axe de révolution de la cheminée, en ce qu'un joint annulaire est disposé dans la cheminée pour assurer une étanchéité entre la cheminée et une surface externe cylindrique du maître-cylindre qui y est engagée, en ce qu'une pluralité d'inserts, comprenant au moins des premier et second inserts fixés à l'intérieur de l'enveloppe, restreignent localement le diamètre de l'ouverture de la cheminée, en ce que la première extrémité du maître-cylindre présente une pluralité de cannelures creusées suivant l'axe de révolution de la cheminée et dans chacune desquelles un insert correspondant de la pluralité d'inserts est sélectivement engagé, et en ce que la première extrémité du maître-cylindre présente une pluralité de rainures périphériques, angulairement décalées par rapport aux cannelures, et dans lesquelles les inserts sont respectivement engagés par rotation relative de la cheminée et du maître-cylindre autour de l'axe de révolution.

Dans son mode de réalisation préféré, le dispositif de l'invention vise en outre à offrir une garantie optimale contre tout risque de démontage accidentel.

Il est alors fait en sorte que chaque rainure périphérique soit séparée de chaque cannelure adjacente par une butée de rotation, qu'une gorge annulaire relie entre elles les rainures périphériques, que les inserts soient reçus à libre rotation relative de la cheminée et du maître-cylindre dans la gorge annulaire après insertion de la première extrémité du maître-cylindre dans la cheminée par translation relative suivant la première direction, et qu'après placement de chaque insert dans une rainure correspondante par rotation relative de la cheminée et du maître-cylindre, chaque insert soit bloqué en rotation entre deux butées de rotation par translation relative de la première extrémité du maître-cylindre dans la cheminée suivant une seconde direction inverse de la première direction.

Le dispositif de l'invention comprend par exemple deux inserts diamétralement opposés l'un à l'autre par rapport à l'axe de révolution de la cheminée.

En outre, le joint annulaire est de préférence engagé dans un logement creusé dans la surface externe du maître-cylindre.

D'autres caractéristiques et avantages de l'invention ressortiront clairement de la description qui en est faite ci-après, à titre indicatif et nullement limitatif, en référence aux dessins annexés, dans lesquels:

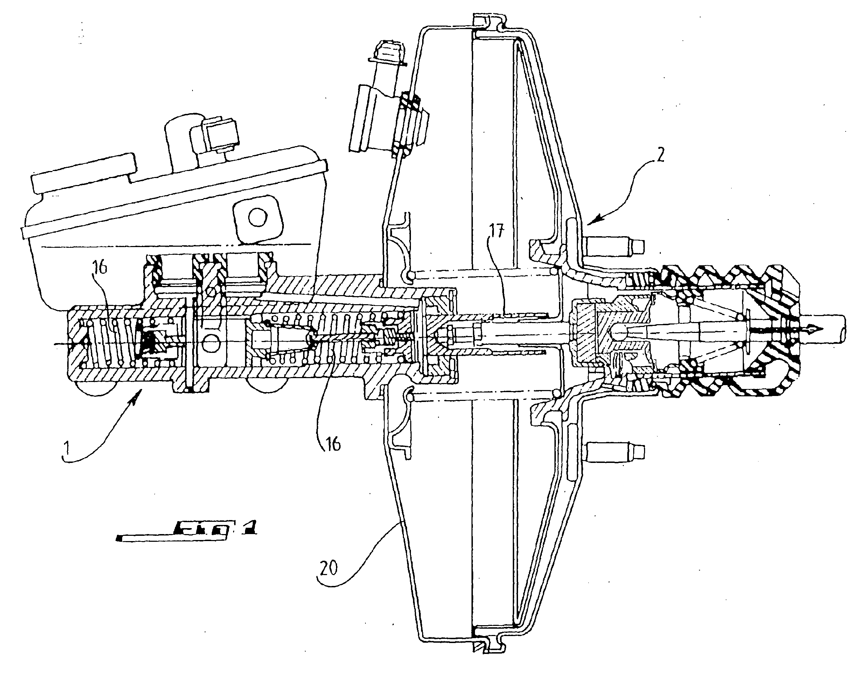

- la Figure 1 est une vue en coupe d'un dispositif connu;

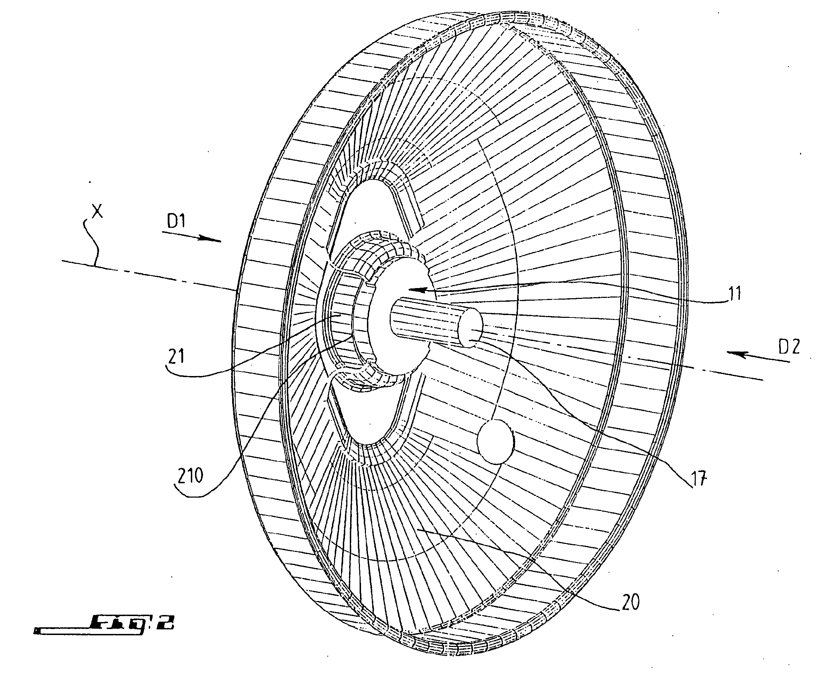

- la Figure 2 est une vue en perspective partielle et simplifiée d'un dispositif conforme à l'invention, vu de l'intérieur de l'enveloppe du servomoteur;
- la Figure 3 est un agrandissement d'une partie de la figure 2; et
- la Figure 4 est une vue en perspective agrandie, partielle et simplifiée d'un dispositif conforme à l'invention, vu de l'extérieur de l'enveloppe du servomoteur et après arrachement d'une partie de cette enveloppe.

Comme annoncé précédemment, l'invention concerne un dispositif de freinage qui comprend un maître-cylindre 1 et un servomoteur pneumatique d'assistance au freinage 2 et dans lequel le maître-cylindre 1 est fixé de façon étanche à l'enveloppe rigide 20 du servomoteur.

L'invention, qui concerne plus particulièrement la liaison du maître-cylindre avec le servomoteur, permet une fixation du type dit "à baïonnette"..

Pour ce faire, l'enveloppe 20 du servomoteur présente tout d'abord une cheminée cylindrique 21 qui débouche à l'intérieur du servomoteur 2 par une ouverture circulaire 210.

Le diamètre de cette ouverture 210 est prévu pour permettre à l'extrémité 11 du maître-cylindre 1 d'être insérée dans la cheminée 21 par un rapprochement relatif du maître-cylindre et du servomoteur, c'est-à-dire par une translation suivant la direction D1 le long de l'axe de révolution X de la cheminée 21.

A distance de l'extrémité 11, le maître-cylindre 1 présente une surface externe cylindrique s'ajustant à faible jeu dans la cheminée 21.

Un joint annulaire 3, par exemple engagé dans un logement 100 creusé dans la surface externe 10 du maître-cylindre 1, est disposé dans la cheminée 21 pour assurer l'étanchéité entre la cheminée 21 et cette surface externe cylindrique 10 du maître-cylindre 1.

Une pluralité d'inserts, par exemple deux inserts 41 et 42 diamétralement opposés l'un à l'autre par rapport à l'axe de révolution X de la cheminée 21, sont fixés à l'intérieur de l'enveloppe 20 pour former une restriction locale du diamètre de l'ouverture 210 de la cheminée 21.

De son côté, l'extrémité 11 du maître-cylindre présente un nombre correspondant de cannelures, et par exemple deux cannelures 121 et 122, creusées parallèlement à l'axe de révolution X de la cheminée 21, et dans lesquelles s'engagent respectivement les inserts 41 et 42 lors du rapprochement du maître-cylindre et du servomoteur.

L'extrémité 11 du maître-cylindre 1 présente par ailleurs une pluralité de rainures périphériques, et par exemple deux rainures 131 et 132, angulairement décalées par rapport aux cannelures 121 et 122, et transversales à ces dernières.

Ces rainures 131 et 132 sont destinées à recevoir les inserts 41 et 42, qui y sont respectivement engagés par rotation relative de la cheminée 21 et du maître-cylindre 1 autour de l'axe de révolution X.

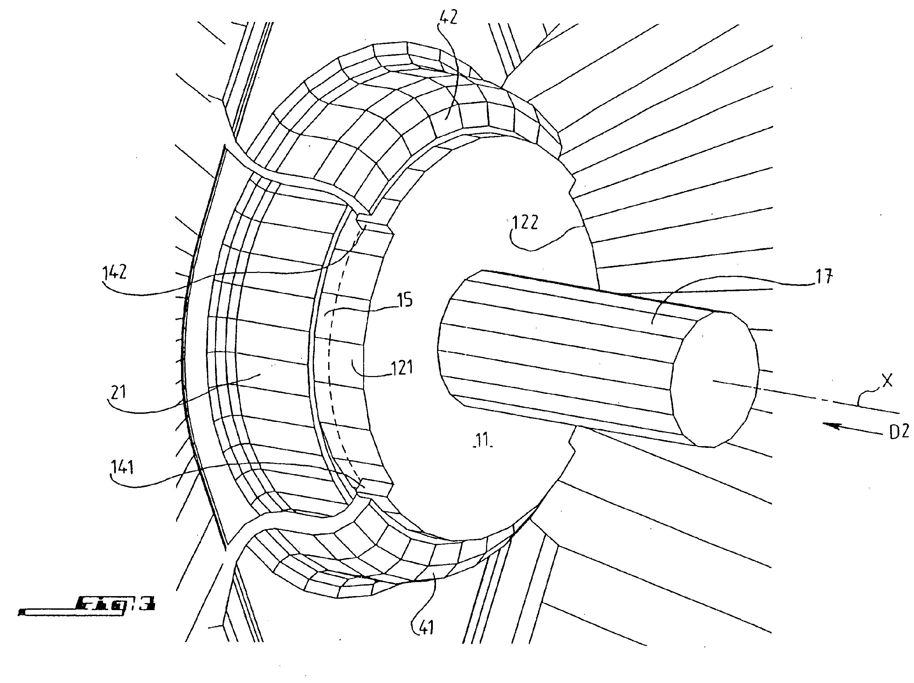

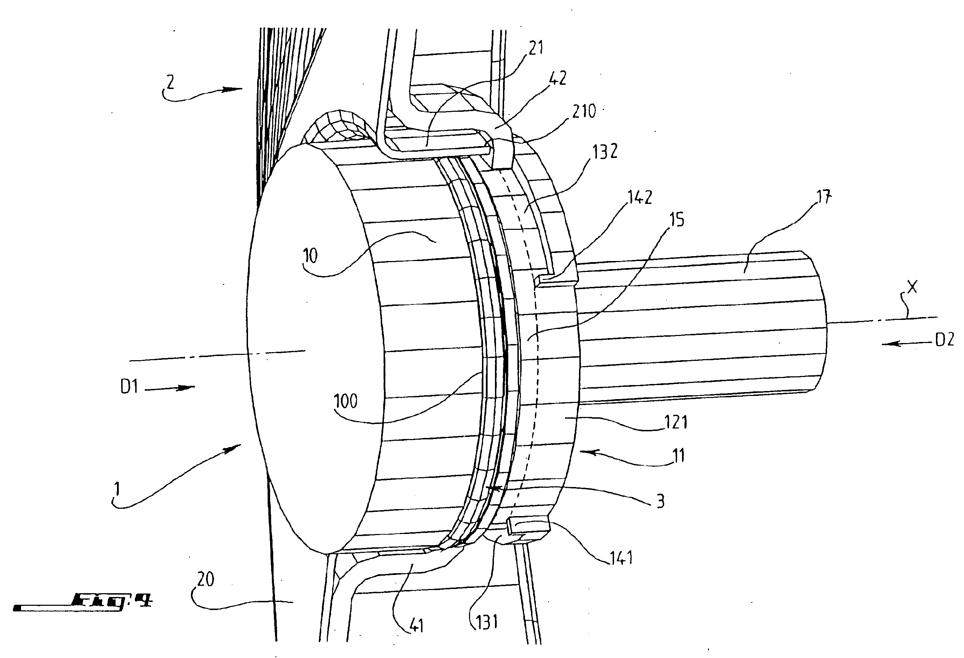

Pour assurer, après montage, un maintien optimal du maître-cylindre sur le servomoteur, chaque rainure périphérique 131 et 132 est séparée de chacune des cannelures 121 et 122 qui lui est adjacente par une butée de rotation, telle que 141 et 142, et une gorge annulaire 15 relie entre elles les rainures périphériques 131 et 132 en passant par-dessus les butées 141 et 142, cette gorge étant matérialisée, sur les figures 3 et 4, par des lignes fictives en pointillés.

La gorge annulaire 15 présente une largeur suffisante pour permettre aux inserts 41 et 42 de passer entre les butées 141 et 142 et la surface cylindrique 10 du maître-cylindre 1.

En d'autres termes, après insertion de l'extrémité 11 du maître-cylindre 1 dans la cheminée 21 obtenue par rapprochement réciproque suivant la direction D1, la cheminée 21 et le maître-cylindre 1 peuvent subir une libre rotation relative par circulation des inserts 41 et 42 dans la gorge annulaire 15.

Une fois que, grâce à cette rotation, les inserts 41 et 42 ont été placés dans les rainures correspondantes 131 et 132, le maître-cylindre 1 est éloigné du servomoteur. 2 par translation de l'extrémité 11 du maître-cylindre 1 dans la cheminée 21 suivant la direction D2, inverse de la direction D1, de sorte que chacun des inserts 41 et 42 est bloqué en rotation entre deux butées de rotation telles que 141 et 142.

Or, une fois que le maître-cylindre 1 est monté sur le servomoteur 2, les ressorts 16 internes au maître-cylindre 1 repoussent l'extrémité 11 du maître-cylindre à distance de la tige d'actionnement 17, c'est-à-dire sollicitent cette extrémité 11 suivant la direction D2.

Ainsi, le dispositif que forment ensemble le maître-cylindre et le servomoteur, réalisé suivant l'invention, offre une grande facilité de montage, une grande facilité de démontage, et une totale garantie contre tout risque de démontage accidentel.

## Revendications

1. Dispositif de freinage, comprenant un maître-cylindre (1) et un servomoteur pneumatique d'assistance au freinage (2), le maître-cylindre (1) étant fixé de façon étanche à une enveloppe rigide (20) du servomoteur, **caractérisé en ce que** l'enveloppe (20) du servomoteur présente une cheminée cylindrique (21) débouchant à l'intérieur du servomoteur (2) par une ouverture circulaire (210) de diamètre déterminé et dans laquelle une première extrémité (11) du maître-cylindre (1) est insérée par translation relative suivant une première direction (D1) le long d'un axe de révolution (X) de la cheminée (21), **en ce qu'**un joint annulaire (3) est disposé dans la cheminée (21) pour assurer une étanchéité entre la cheminée (21) et une surface externe cylindrique (10) du maître-cylindre (1) qui y est engagée, **en ce qu'**une pluralité d'inserts (41, 42), comprenant au moins des premier et second inserts (41, 42) fixés à l'intérieur de l'enveloppe (20), restreignent localement le diamètre de l'ouverture (210) de la cheminée (21), **en ce que** la première extrémité (11) du maître-cylindre présente une pluralité de cannelures (121, 122) creusées suivant l'axe de révolution (X) de la cheminée (21) et dans chacune desquelles un insert correspondant de la pluralité d'inserts (41, 42) est sélectivement engagé, et **en ce que** la première extrémité (11) du maître-cylindre (1) présente une pluralité de rainures périphériques (131, 132), angulairement décalées par rapport aux cannelures (121, 122), et dans lesquelles les inserts (41, 42) sont respectivement engagés par rotation relative de la cheminée (21) et du maître-cylindre (1) autour de l'axe de révolution (X).

2. Dispositif de freinage suivant la revendication 1, **caractérisé en ce que** chaque rainure périphérique (131, 132) est séparée de chaque cannelure (121, 122) adjacente par une butée de rotation (141, 142), **en ce qu'**une gorge annulaire (15) relie entre elles les rainures périphériques (131, 132), **en ce que** les inserts (41, 42) sont reçus à libre rotation relative de la cheminée (21) et du maître-cylindre (1) dans la gorge annulaire (15) après insertion de la première extrémité (11) du maître-cylindre (1) dans la cheminée (21) par translation relative suivant la première direction (D1), et **en ce qu'**après placement de chaque insert (41, 42) dans une rainure correspondante (131, 132) par rotation relative de la cheminée (21) et du maître-cylindre (1), chaque insert (41, 42) est bloqué en rotation entre deux butées de rotation (141, 142) par translation relative de la première extrémité (11) du maître-cylindre (1) dans la cheminée (21) suivant une seconde direction (D2) inverse de la première direction (D1).

3. Dispositif de freinage suivant la revendication 1 ou 2, **caractérisé en ce qu'**il comprend deux inserts (41, 42) diamétralement opposés l'un à l'autre par rapport à l'axe de révolution (X) de la cheminée (21).

4. Dispositif de freinage suivant l'une quelconque des revendications précédentes, **caractérisé en ce que** le joint annulaire (3) est engagé dans un logement (100) creusé dans la surface externe (10) du maître-cylindre (1).

## Claims

1. Braking device, comprising a master cylinder (1) and a pneumatic servomotor (2) for an assisted braking, the master cylinder (1) being attached to a rigid casing (20) of the servomotor in a tight manner, **characterised in that** the casing (20) of the servomotor comprises a cylindrical shaft (21), opening into the servomotor (2) through a circular opening (210) having a determined diameter and into which a first end (11) of the master cylinder (1) is introduced by a relative translational motion in a first direction (D1) along an axis of revolution (X) of the shaft (21), **in that** a ring-type seal (3) is disposed inside the shaft (21) for a reliable tightness between the shaft (21) and a cylindrical outer surface (10) of the master cylinder (1) fitted inside said shaft, **in that** a plurality of inserts (41, 42) comprising at least a first and a second inserts (41, 42) fastened inside the casing (20), restrict locally the diameter of the opening (210) of the shaft (21), **in that** the first end (11) of the master cylinder comprises a plurality of splines (121, 122), cut along the axis of revolution (X) of the shaft (21) and each one of them receiving a corresponding insert belonging to the plurality of inserts (41, 42), in a selective manner, and **in that** the first end (11) of the master cylinder (1) has a plurality of peripheral slots (131, 132), which are angularly offset in relation to the splines (121, 122) and which receive the respective inserts (41, 42), through a relative rotational motion of the shaft (21) and of the master cylinder (1) about the axis of revolution (X).

2. Braking device according to claim 1, **characterised in that** each peripheral slot (131, 132) is separated from each spline (121, 122), which is adjacent to it, by a rotation stop (141, 142), **in that** an annular groove (15) interconnects the peripheral slots (131, 132), **in that** the inserts (41, 42) are fitted inside the annular groove (15) in the course of a relative free rotational motion of the shaft (21) and of the master cylinder (1) once the first end (11) of the master cylinder (1) has been introduced into the shaft (21) by a relative translational motion in the first direction (D1) and **in that**, once each insert (41, 42) has been positioned in a corresponding slot (131, 132) by means of a relative rotational motion of the shaft (21) and of the master cylinder (1), each insert (41, 42) is rotationally locked between two rotation stops (141, 142), by a relative translational motion of the first end (11) of the master cylinder (1) inside the shaft (21) in a second direction (D2), that is in the opposite direction to the first direction (D1).

3. Braking device according to claim 1 or 2, **characterised in that** it comprises two inserts (41, 42), which are diametrically opposite in relation to the axis of revolution (X) of the shaft (21).

4. Braking device according to any one of the preceding claims, **characterised in that** the ring-type seal (3) is fitted in a cavity (100) provided in the outer surface (10) of the master cylinder (1).

## Patentansprüche

1. Bremsvorrichtung mit einem Hauptzylinder (1) und einem pneumatischen Servomotor (2) zur Bremsunterstützung, wobei der Hauptzylinder (1) in dichter Weise an einem starren Gehäuse (20) des Servomotors befestigt ist, **dadurch gekennzeichnet, dass** das Gehäuse (20) des Servomotors einen zylindrischen Schacht (21) aufweist, der über eine kreisförmige Öffnung (210) mit vorbestimmtem Durchmesser, in die ein erstes Ende (11) des Hauptzylinders (1) durch eine relative Translationsbewegung in eine erste Richtung (D1) entlang einer Drehachse (X) des Schachts (21) eingesetzt ist, in den Servomotor (2) mündet, dass eine Ringdichtung (3) im Schacht (21) angeordnet ist, um eine Dichtigkeit zwischen dem Schacht (21) und einer darin eingesetzten zylindrischen Außenfläche (10) des Hauptzylinders (1) zu gewährleisten, dass mehrere Einsatzstücke (41, 42), die zumindest ein erstes und ein zweites im Gehäuse (20) befestigtes Einsatzstück (41, 42) umfassen, den Durchmesser der Öffnung (210) des Schachts (21) lokal verkleinern, dass das erste Ende (11) des Hauptzylinders mehrere Rillen (121, 122) aufweist, die gemäß der Drehachse (X) des Schachts (21) ausgehöhlt sind und in die jeweils ein entsprechendes Einsatzstück der mehreren Einsatzstücke (41, 42) selektiv eingesetzt ist, und dass das erste Ende (11) des Hauptzylinders (1) mehrere Umfangskerben (131, 132) aufweist, die zu den Rillen (121, 122) winkelmäßig versetzt sind und in die die Einsatzstücke (41, 42) jeweils durch relative Drehung zwischen dem Schacht (21) und dem Hauptzylinder (1) um die Drehachse (X) eingesetzt sind.

2. Bremsvorrichtung nach Anspruch 1, **dadurch gekennzeichnet, dass** jede Umfangskerbe (131, 132) durch einen Drehanschlag (141, 142) von jeder angrenzenden Rille (121, 122) getrennt ist, dass eine ringförmige Nut (15) die Umfangskerben (131, 132) miteinander verbindet, dass die Einsatzstücke (41, 42) nach dem Einsetzen des ersten Endes (11) des Hauptzylinders (1) in den Schacht (21) durch eine relative Translationsbewegung in die erste Richtung (D1) so in der ringförmigen Nut (15) aufgenommen sind, dass der Schacht (21) und der Hauptzylinder (1) frei zueinander drehen können, und dass nach dem Einsetzen jedes Einsatzstücks (41, 42) in eine entsprechende Kerbe (131, 132) durch eine relative Drehung zwischen dem Schacht (21) und dem Hauptzylinder (1) jedes Einsatzstück (41, 42) zwischen zwei Drehanschlägen (141, 142) in Drehung blockiert ist durch die relative Translationsbewegung des ersten Endes (11) des Hauptzylinders (1) im Schacht (21) in eine zweite Richtung (D2), die zur ersten Richtung (D1) entgegengesetzt ist.

3. Bremsvorrichtung nach Anspruch 1 oder 2, **dadurch gekennzeichnet, dass** sie zwei Einsatzstücke (41, 42) aufweist, die bezüglich der Drehachse (X) des Schachts (21) diametral entgegengesetzt angeordnet sind.

4. Bremsvorrichtung nach einem der vorhergehenden Ansprüche, **dadurch gekennzeichnet, dass** die Ringdichtung (3) in eine Aufnahme (100) eingesetzt ist, die in der Außenfläche (10) des Hauptzylinders (1) ausgehöhlt ist.
